(19) Europäisches Patentamt
European Patent Office
Office européen des brevets

(11) **EP 2 472 285 B1**

(12) **FASCICULE DE BREVET EUROPEEN**

(45) Date de publication et mention
de la délivrance du brevet:
**11.09.2013 Bulletin 2013/37**

(51) Int Cl.:
*G01S 7/292* *(2006.01)*   *G01S 13/88* *(2006.01)*
*G01S 13/28* *(2006.01)*   *G01S 13/524* *(2006.01)*

(21) Numéro de dépôt: **11195060.6**

(22) Date de dépôt: **21.12.2011**

(54) **Procédé d'amélioration des performances d'un radar en présence d'échos rétrodiffusés diffus**

Verfahren zur Verbesserung der Leistungen eines Radars bei Vorhandensein von diffusen zurückgestreuten Echos

Method for improving the performance of a radar in the presence of broadcast backscattered echoes

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2010 FR 1005180**

(43) Date de publication de la demande:
**04.07.2012 Bulletin 2012/27**

(73) Titulaire: **Thales**
**92200 Neuilly Sur Seine (FR)**

(72) Inventeurs:
• **Boutherin, Pierre**
**78996 ELANCOURT (FR)**
• **Fages, PIERRE**
**78990 ELANCOURT (FR)**
• **Olliver, Franck**
**75005 PARIS (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A2- 0 964 267     US-A- 4 143 373**

• **AMIT KR SHUKLA ET AL: "Eclipsing loss and HPRF selection for airborne radar", RADAR CONFERENCE, 2009. EURAD 2009. EUROPEAN, IEEE, PISCATAWAY, NJ, USA, 30 septembre 2009 (2009-09-30), pages 525-528, XP031558383, ISBN: 978-1-4244-4747-3**
• **ZRNIC B M ET AL: "The eclipsing zone problem in the chirp radar", EUROCON'2001, TRENDS IN COMMUNICATIONS, INTERNATIONAL CONFERENCE ON. JUL. 4-7, 2001, PISCATAWAY, NJ, USA, IEEE, vol. 2, 4 juillet 2001 (2001-07-04), pages 329-332, XP010554423, ISBN: 978-0-7803-6490-5**

**Description**

L'invention concerne un procédé pour améliorer les performances de détection d'une cible par un radar en présence d'échos rétrodiffusés diffus, notamment ceux dus aux phénomènes atmosphériques.

Une des difficultés pour les radars et les autodirecteurs, par exemple ceux des missiles autoguidés, est de déterminer les cibles utiles parmi les échos rétrodiffusés par l'environnement. Ces échos rétrodiffusés appelés fouillis sont liés à la présence du sol, mais aussi à la présence dans l'environnement du radar, des nuages, de la pluie, des chutes de neige ou d'autres phénomènes atmosphériques.

La particularité des échos atmosphériques diffus tels que la pluie est qu'ils sont faiblement localisés en distance et angulairement. Bien que la rétrodiffusion des échos atmosphériques ne soit pas très forte, comme la distance peut être très faible, les niveaux reçus peuvent être très forts.

Un filtrage Doppler permet classiquement de séparer le fouillis et les cibles du fait de leur vitesses habituellement différentes, mais le bruit de l'émission radar fixé par sa pureté spectrale se retrouve sur le fouillis reçu et, compte tenu du fort niveau reçu, désensibilise la détection radar et dégrade de manière significative la portée radar.

Le document EP 0 964 267 A2 divulgue un procédé pour améliorer les performances de détection d'une cible par un radar, qui consiste à déterminer les fréquences de récurrence minimisant la perte de signal engendrée par l'éclipse distance produite par le masquage de l'écho rétrodiffusé par la cible et l'éclipse vitesse résultant de l'écart entre la vitesse radiale relative de la cible et le fouillis principal et ses harmoniques.

Pour pallier les inconvénients dus à la présence de fouillis atmosphérique, l'invention propose un procédé de détection de cibles par un radar en présence d'échos rétrodiffusés diffus, les cibles étant désignées, selon une hypothèse de localisation des cibles a priori, en distance $D_{DO}$ avec un domaine d'imprécision $\Delta D_{DO}$ et en vitesse radiale $Vr_{DO}$ avec un domaine d'imprécision $\Delta Vr_{DO}$, le radar, de type à compression d'impulsions, émettant vers les cibles une onde sous forme d'un train d'impulsions $...E_i, E_{i+1}, ...$ de fréquence de récurrence Fr, de bruit Bp porté par l'onde, le radar comportant un détecteur des échos reçus, de sensibilité St.

Le procédé consiste à déterminer les fréquences de récurrence Fr minimisant dans le domaine d'imprécision de désignation en distance $\Delta D_{DO}$ et en vitesse radiale $\Delta Vr_{DO}$, d'une part, la perte de signal de l'écho rétrodiffusé par la cible et, d'autre part, la désensibilisation du détecteur radar par les échos rétrodiffusés par le fouillis,

- la perte de signal rétrodiffusé par la cible étant engendrée par une perte $\boldsymbol{P_{EclD}}$ due à l'éclipse distance produite par le masquage Lr de l'écho rétrodiffusé par la cible reçu par le radar pendant la durée Le de l'impulsion $...E_i, E_{i+1}, ...$ émise et par une autre perte $\boldsymbol{P_{EclV}}$ due à l'éclipse vitesse résultant de l'écart entre la vitesse radiale relative de la cible et le fouillis principal et ses harmoniques, la vitesse radiale étant la composante de vitesse sur la droite reliant le radar et la cible,
- la désensibilisation du détecteur de signal reçu par le radar étant causée par le bruit produit par les échos rétrodiffusés par le fouillis atmosphérique du fait du bruit Bp porté par l'onde émise.

L'approche retenue exploite le fait que les échos gênants de rétrodiffusion par les éléments atmosphériques sont à très courte distance.

L'invention sera mieux comprise par une réalisation du procédé selon l'invention en référence aux figures indexées dans lesquelles :

- la figure 1 représente le niveau de bruit porté par le fouillis atmosphérique dû à la pluie en fonction de la distance ;
- la figure 2a montre l'ambiguïté distance Dfr liée à la période de répétition PRI des impulsions émises par un radar ;
- la figure 2b montre en réception radar le domaine de distance $\Delta D_{DO}$ centré sur la désignation d'objectif ;
- la figure 3 montre les fréquences de récurrence Fr, autour d'une valeur centrale de 100 kHz, satisfaisant le critère distance ;
- la figure 4 montre le spectre Doppler du signal reçu par le radar avec les repliements du fouillis et les zones de gêne en vitesse ;
- la figure 5 représente les zones de gêne en vitesse en fonction de la fréquence de répétition PRI des impulsions ;
- la figure 6a montre la durée Le de l'impulsion Ei à l'émission ;
- la figure 6b la durée Lr du masquage Mi à la réception et ;
- la figure 6c l'écho Eci rétrodiffusé par une cible.

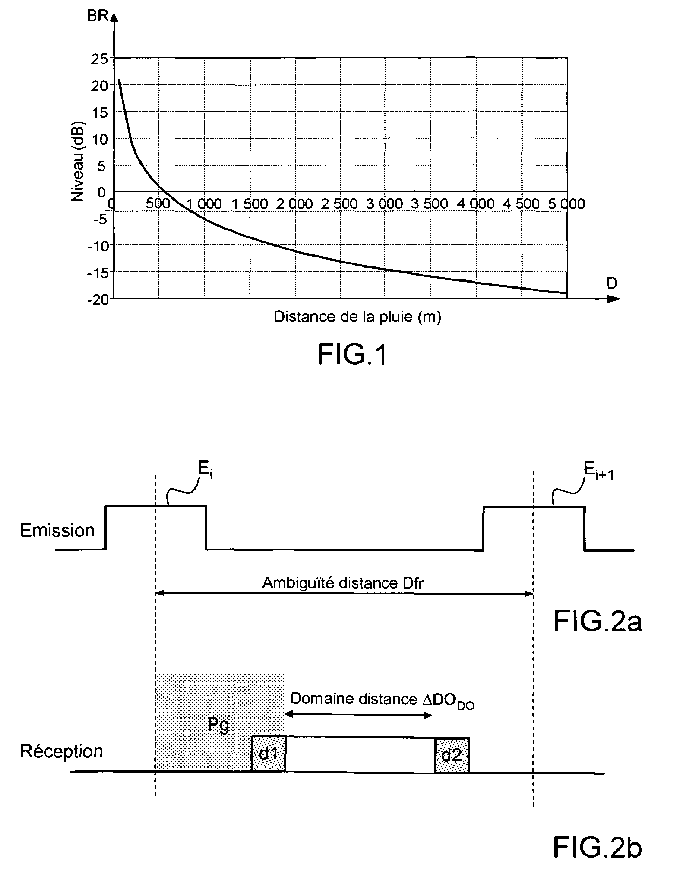

La figure 1 représente le niveau de bruit porté par le fouillis atmosphérique dû à la pluie en fonction de la distance. Le bruit BR (en dB) porté par le fouillis de la figure 1 diminue très rapidement avec la distance D.

L'idée consiste à utiliser une forme d'onde permettant de réjecter les échos atmosphériques à faible distance et donc d'utiliser une fréquence de récurrence Fr des impulsions émises par le radar basse ou moyenne, typiquement entre 50 kHz et 150 kHz.

L'utilisation d'une fréquence de récurrence Fr basse ou moyenne réduit la discrimination en fréquence Doppler entre le fouillis et les cibles du fait des ambiguïtés en vitesse radiale. Il s'agit donc, par le procédé selon l'invention, de rechercher la meilleure forme d'onde émise par le radar pour limiter l'effet des échos atmosphériques à faible distance tout en gardant une bonne discrimination en vitesse entre le fouillis et les cibles.

La portée radar est fixée par la puissance moyenne émise, la puissance crête étant fixée par l'émetteur. Pour travailler à portée constante, il faut donc conserver un facteur de forme F identique, le facteur de forme F étant donné par le produit de la largeur d'impulsion Le émise par la fréquence de récurrence Fr.

Le fait d'utiliser une fréquence de récurrence Fr basse ou moyenne impose donc une largeur d'impulsion Le grande ou moyenne ce qui n'est pas favorable vis-à-vis des échos diffus. Par conséquent il est nécessaire d'améliorer la résolution distance, le niveau de fouillis reçu par le radar étant proportionnel à la résolution distance. L'amélioration de la résolution distance est possible grâce à la technique de compression d'impulsion.

Une forme d'onde de moyenne fréquence de récurrence (d'acronyme MFR pour Moyenne Fréquence de Récurrence) avec compression d'impulsion doit être choisie. De manière plus précise, une fréquence de récurrence Fr comprise entre 50 kHz et 150 kHz permet une ambiguïté distance compatible de la discrimination souhaitée sans être trop ambiguë en vitesse radiale. La résolution distance est adaptée à la taille des cibles d'intérêt.

La difficulté réside ensuite dans le choix précis de la fréquence de récurrence Fr à utiliser pour minimiser les éclipses distance et vitesse, définies par la suite, dues respectivement au masquage de l'impulsion reçue par le radar pendant le temps d'émission de l'impulsion de largeur ou de durée Le, et le masquage de la fréquence Doppler cible par le fouillis et ses repliements en fonction de la désignation d'objectif en distance et en vitesse radiale.

Le choix de la fréquence de récurrence Fr doit satisfaire au mieux les critères distance et vitesse radiale. Le cas dimensionnant est celui de la phase de recherche, où, la distance D et la vitesse radiale relative Vr de la cible sont entachées des imprécisions de la désignation d'objectif fournie au radar ou à l'autodirecteur. Le terme « désignation » ou « désignation d'objectif » correspond à une hypothèse de localisation de la cible a priori.

Le radar aéroporté ou l'autodirecteur d'un missile, reçoivent des informations initiales de distance et de vitesse radiale d'un dispositif externe avec une certaine précision.

Par la suite sont passés en revue les choix de la fréquence de répétition (ou de récurrence) Fr selon différents critères.

1) Choix de la fréquence de récurrence Fr en fonction d'un critère de distance :

La figure 2a montre l'ambiguïté distance Dfr liée à la période de répétition PRI des impulsions émises par un radar.

La période de répétition PRI des impulsions ...$E_i$, $E_{i+1}$, ... émises par un radar est un paramètre important dans le calcul de la distance maximum de détection car les échos qui reviennent au radar après un temps supérieur à la PRI donnent des distances erronées.

La fréquence de répétition des impulsions Fr = 1/PRI détermine la distance maximum pouvant être déterminée sans ambiguïté. Les échos revenant au radar au delà de la PRI se traduisent par une distance ambiguë alors que ceux qui reviennent dans un délai inférieur à la PRI sont vus à la distance correcte (non ambiguë).

La figure 2b montre en réception radar le domaine de distance $\Delta D_{DO}$ centré sur la désignation d'objectif.

La figure 2b montre une première zone Pg de distances proche du radar dans laquelle le phénomène atmosphérique, par exemple la pluie, est gênant. La fréquence de récurrence Fr doit être choisie de manière à placer le domaine de distances $\Delta D_{DO}$ dans une zone où la gêne par les échos diffus est la moindre c'est-à-dire grossièrement dans la deuxième moitié de l'ambiguïté distance Dfr.

A l'une et à l'autre des extrémités du domaine de distance il existe une respective plage de distances d1, d2 à exclure en raison de l'effet de bord de la compression d'impulsion utilisée par le radar.

Soient :

D_{DO} : la distance de la cible fournie par la désignation d'objectif
Fr : la fréquence de récurrence des impulsions radar
Dfr : l'ambigüité distance
Da : la distance ambiguë, avec Da = $D_{DO}$ modulo Dfr
c : la vitesse de la lumière

L'ambigüité distance *Dfr* sera exprimée par :

$$Dfr = \frac{c}{2 \cdot Fr}$$

Le centrage Cimp de l'impulsion dans la récurrence sera exprimé par :

$$Cimp = \frac{Da}{Dfr} \in \left[0,1\right[$$

Les fréquences de récurrence Fr fournies par l'expression $Fr = (k + Cimp) \cdot \dfrac{c}{2 \cdot D_{DO}}$ (1) avec $k$ entier assurent le centrage en distance ambiguë souhaité.

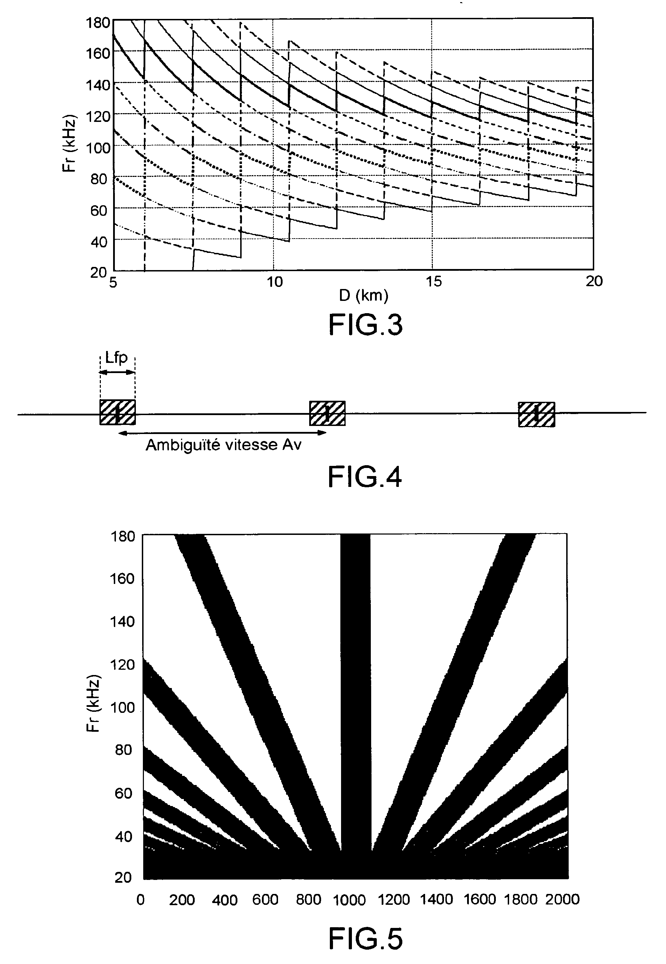

La figure 3 montre des fréquences de récurrence Fr autour d'une valeur centrale de 100 kHz fournies par la formulation (1) en faisant varier la distance $D_{DO}$ et le nombre $k$.

Les courbes en dents de scie se superposant en fonction de la valeur (entière) de k.

2) Choix de la fréquence de récurrence Fr en fonction d'un critère de vitesse.

Le déplacement d'une cible comporte une composante parallèle et une composante perpendiculaire à la droite radar-cible. La variation de vitesse mesurée n'est donc pas nécessairement reliée à la vitesse réelle mais seulement à celle de la composante radiale du déplacement, soit celle se produisant par rapport à la droite radar-cible. La vitesse radiale relative de la cible peut être estimée en déterminant le glissement de fréquence moyen de la porteuse radar à l'intérieur d'un groupe d'impulsions qu'une cible qui, en se déplaçant avec une vitesse radiale non nulle par rapport à la droite radar-cible, provoque un glissement de fréquence entre la fréquence de référence de l'émetteur et celle de la porteuse reçue après rétrodiffusion sur la cible (effet Doppler).

Un des principaux problèmes du radar Doppler pulsé est l'ambigüité sur la vitesse étant donné que le spectre du signal émis comporte des raies espacées de la fréquence de répétition Fr. On peut ainsi déterminer une plage de vitesses radiales sans ambiguïté sur la vitesse en fonction de la fréquence de répétition Fr.

La figure 4 montre le spectre Doppler du signal reçu par le radar avec les repliements du fouillis et les zones de gêne en vitesse (de largeur Lfp) dues au fouillis principal espacées de l'ambiguïté vitesse Av.

Pour un radar aéroporté ou un autodirecteur de missile, la largeur Lfp du fouillis principal dépend de la vitesse Vp du porteur du radar, de la largeur du faisceau radar $\theta_0$ et du dépointage $\alpha$ du faisceau radar par rapport au vecteur vitesse.

La largeur à -6 dB, du fait du trajet aller et retour de l'onde radar, du fouillis principal, soit *Lfp_6dB* est donnée par la relation :

$$Lfp\_6dB = Vp \cdot \theta_0 \cdot \sin(\alpha)$$

et la largeur totale Lfp est environ 2,5 fois la largeur *Lfp_6dB*.

La figure 5 représente les zones de gêne en vitesse en fonction de la fréquence de répétition PRI des impulsions. Dans le graphique de la figure 5, les zones de gêne (de largeur Lfp) sont représentées en noir dans l'espace : fréquences de répétition Fr en ordonnées, vitesse radiale relative en abscisses, centrée sur la vitesse radiale Vrp du porteur.

3) Choix final de la fréquence de récurrence Fr :

Le choix final de la fréquence de récurrence Fr doit combiner les critères distance et vitesse. Compte tenu des précisions de la désignation d'objectif en distance $\Delta D_{DO}$ et en vitesse radiale $\Delta Vr_{DO}$, plusieurs fréquences de récurrence Fr sont nécessaires pour « couvrir » le domaine de recherche.

Soit NFr le nombre de fréquences de récurrences Fr utilisées.

En définissant un « critère de coût » et des « contraintes », le choix de Fr peut être vu comme un problème d'optimisation sous contraintes.

Il s'agit de déterminer les fréquences de récurrence Fr qui minimisent les différentes causes de désensibilisation de la détection radar à savoir :

- les éclipses distance,
- la désensibilisation par le bruit porté par le fouillis,
- les éclipses vitesse,

sur l'ensemble d'un domaine distance $\Delta D_{DO}$ et vitesse radiale $\Delta Vr_{DO}$ centré sur la désignation d'objectif.

Par la suite sont quantifiées les causes de désensibilisation de la détection du radar :

**A)** Quantification des éclipses distances :

L'éclipse distance est produite par le masquage de l'impulsion reçue par le radar pendant la durée de l'impulsion émise.

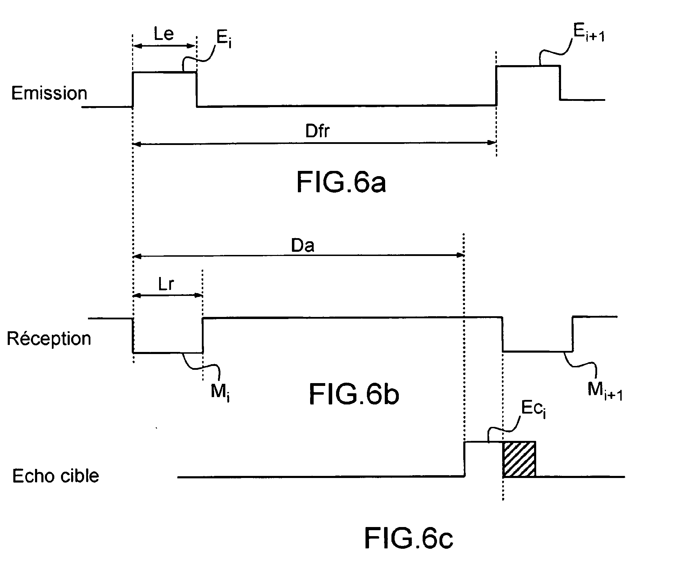

La figure 6a montre la durée Le de l'impulsion Ei à l'émission, la figure 6b la durée Lr du masquage Mi à la réception et la figure 6c l'écho Eci rétrodiffusé par la cible.

Le taux d'éclipse distance EclD s'écrit, par exemple dans le cas où Lr = Le, en fonction de la distance ambiguë Da de la cible, de la manière suivante :

- si : $Da \leq Le$,

$$EclD = 1 - \frac{Da}{Le}$$

on dira qu'on est dans le cas d'une éclipse basse,

- si : $Le < Da \leq Dfr - Le$ , $EclD = 0$
  on dira qu'on est hors éclipse

- si :

$$Da > Dfr - Le \, , \qquad EclD = 1 - \frac{Dfr - Da}{Le}$$

on dira qu'on est dans l'éclipse haute.

La perte de signal cible $P_{EclD}$ engendrée par l'éclipse distance est calculée en dB par l'expression :

$$P_{EclD} = -20 \cdot \log(1 - EclD) \qquad (2)$$

**B)** Quantification de la désensibilisation par le bruit porté :

Le calcul comprend les étapes successives suivantes :

- calcul du niveau de fouillis atmosphérique par l'équation du radar en fonction de la réflectivité volumique (fonction du taux de précipitation et de la longueur d'onde, pour la pluie) et des paramètres du radar ou de l'autodirecteur (Puissance émise, gain d'antenne, longueur d'onde, facteur de bruit, pertes émission/réception, bande de réception, résolution distance)
- prise en compte des ambiguïtés distance et vitesse en fonction de la fréquence de répétition Fr,
- calcul du niveau du bruit porté Bp en fonction de la pureté spectrale de l'onde émise par le radar,
- addition du bruit porté au bruit thermique :

$$P_{Bp} = 10 \cdot \log\left(1 + 10^{Bp/10}\right)$$

$P_{Bp}$ représente la désensibilisation du récepteur radar par le bruit porté.

**C)** Quantification des éclipses vitesse :

L'éclipse vitesse est évaluée à partir de l'écart entre la vitesse radiale relative de la cible Vr et le fouillis principal et ses harmoniques.

L'écart de vitesse $\Delta V$ est donné par :

$$\Delta V = \underset{-N \le n \le N}{Min}\left[\left|Vr - (Vrp + n \cdot Av)\right|\right]$$

Avec : Vrp : vitesse radiale du porteur

Av : ambiguïté vitesse

n : entier

N : nombre maximum d'ambiguïtés vitesse.

L'ambiguïté vitesse $Av$ est donnée par :

$$Av = \frac{\lambda}{2} \cdot Fr$$

Avec : $\lambda$ : longueur d'onde émise

Le taux d'éclipse vitesse $EclV$ est calculé par : si $\Delta V > \dfrac{Lfp}{2}$ : $EclV$=0 (hors éclipse) sinon :

$$EclV = 1 - \frac{\Delta V}{Lfp/2}$$

avec Lfp la largeur de gêne du fouillis principal.

La perte $P_{EclV}$ (en dB) correspondant à l'éclipse vitesse est calculée à partir d'une désensibilisation modélisée par une loi gaussienne :

$$P_{EclV} = P_0 + 10 \cdot \log\left[2^{-2 \cdot (K \cdot (1 - EclV))^2}\right]$$

avec $P_0$ la perte maximum et K la largeur qui dépendent du faisceau et des paramètres du radar (Puissance émise, gain d'antenne, ...).

Optimisation de la fréquence de récurrence Fr :

**D)** La désensibilisation globale $P_{glob}$ (en dB) peut être calculée par :

$$P_{glob} = P_{EclD} + P_{Bp} + P_{EclV}$$

qui dépend de la distance D, de la vitesse radiale Vr et de la fréquence de répétition Fr des impulsions.

E) calcul de la désensibilisation totale $P_{tot}$ ($Fr_1$, ..., $Fr_{NFr}$) en prenant en compte :

- le critère d'accrochage : une détection parmi les NFr fréquences de récurrence utilisées
- le domaine de recherche (ou précision) en distance $\Delta D_{DO}$ et en vitesse radiale $\Delta Vr_{DO}$.

Ce qui peut s'écrire :

$$P_{tot}(Fr_1, ..., Fr_{NFr}) = \sum_{D=D_{DO}-\Delta D_{DO}/2}^{D_{DO}+\Delta D_{DO}/2} \sum_{Vr=Vr_{DO}-\Delta Vr_{DO}/2}^{Vr_{DO}+\Delta Vr_{DO}/2} \underset{Fr}{Min}\left[P_{glob}(D,Vr,Fr)\right] \quad (5)$$

qui est la fonction de coût à minimiser. avec : $D_{DO}$ : la distance de la désignation d'objectif DO

$\Delta D_{DO}$ : la précision en distance de la DO

$Vr_{DO}$ : la vitesse radiale de la DO

$\Delta Vr_{DO}$ : la précision en vitesse radiale de la DO

L'optimisation de la fonction (5) est un problème complexe puisque multidimensionnel (de dimension NFr) et non linéaire. Les méthodes ou techniques classiques d'optimisation, à gradient par exemple, ne fonctionnent pas bien sur ce type de problème car ils ne permettent que de trouver un minimum local à partir d'une valeur initiale et donc sans garantie du minimum minimorum. On utilise alors un algorithme combinant l'énumération, soit un échantillonnage de la plage de Fr et un algorithme classique à gradient.

Compte tenu des limitations inhérentes à la forme d'onde MFR (ambiguïtés vitesse), ce mode de fonctionnement est mis en oeuvre seulement en cas de détection de fouillis gênant.

Le procédé de choix de la forme d'onde radar selon l'invention, permet

- une amélioration significative de la performance en portée d'un radar aéroporté ou d'un autodirecteur de missiles. L'amélioration des performances est obtenue grâce :
- à l'utilisation d'une forme d'onde MFR avec compression d'impulsion
- au choix des fréquences de récurrence Fr optimales vis-à-vis de critères distance et vitesse.
- dans la mise en oeuvre :
- de techniques radar particulières dans le cadre de la détection de cibles dans du fouillis atmosphérique diffus tel que la pluie
- d'une optimisation des fréquences de récurrence par un procédé combinant l'énumération et une méthode par gradient.

## Revendications

1. Procédé de détection de cibles par un radar en présence d'échos rétrodiffusés diffus, les cibles étant désignées, selon une hypothèse de localisation des cibles a priori, en distance $D_{DO}$ avec un domaine d'imprécision $\Delta D_{DO}$ et en vitesse radiale $Vr_{DO}$ avec un domaine d'imprécision $\Delta Vr_{DO}$, le radar, de type à compression d'impulsions, émettant vers les cibles une onde sous forme d'un train d'impulsions ...$E_i$, $E_{i+1}$, ... de fréquence de récurrence Fr, de bruit $B_p$ porté par l'onde, le radar comportant un détecteur des échos reçus, de sensibilité St,

   **caractérisé en ce qu'**il consiste à déterminer les fréquences de récurrence Fr minimisant dans le domaine d'imprécision de désignation en distance $\Delta D_{DO}$ et en vitesse radiale $\Delta Vr_{DO}$, d'une part, la perte de signal de l'écho rétrodiffusé par la cible et, d'autre part, la désensibilisation du détecteur radar par les échos rétrodiffusés par le fouillis,

   - la perte de signal rétrodiffusé par la cible étant engendrée par une perte $P_{EclD}$ due à l'éclipse distance produite par le masquage Lr de l'écho rétrodiffusé par la cible reçu par le radar pendant la durée Le de l'impulsion ...$E_i$, $E_{i+1}$, ...émise et par une autre perte $P_{EclV}$ due à l'éclipse vitesse résultant de l'écart entre la vitesse radiale relative de la cible et le fouillis principal et ses harmoniques, la vitesse radiale étant la composante de vitesse sur la droite reliant le radar et la cible,

- la désensibilisation du détecteur de signal reçu par le radar étant causée par le bruit produit par les échos rétrodiffusés par le fouillis atmosphérique du fait du bruit $B_p$ porté par l'onde émise.

**2.** Procédé de détection de cibles par un radar selon la revendication 1, **caractérisé en ce qu'**il comporte au moins les étapes suivantes :

A) calcul du niveau de la perte $P_{EclD}$ du signal cible engendrée par l'éclipse distance, avec :

$$P_{EclD} = -20 \cdot \log(1 - EclD)$$

$EclD$ étant le taux d'éclipse distance, s'écrivant dans le cas où Lr = Le, en fonction de la distance ambiguë Da de la cible, de la manière suivante :

$$\text{- si : } Da \leq Le \text{ , } EclD = 1 - \frac{Da}{Le}$$

éclipse basse,

$$\text{- si : } Le < Da \leq Dfr - Le \text{ , } EclD = 0$$

hors éclipse

$$\text{- si : } Da > Dfr - Le \text{ , } EclD = 1 - \frac{Dfr - Da}{Le}$$

éclipse haute

avec : $Le$ durée de l'impulsion Ei à l'émission, Lr durée du masquage Mi à la réception de l'écho Eci rétrodiffusé par la cible.

**B**) calcul du niveau du bruit porté $B_p$, Le calcul comprend les étapes successives suivantes :

- calcul du niveau de fouillis atmosphérique par l'équation du radar en fonction de la réflectivité volumique, dite réflectivité volumique étant fonction du taux de précipitation et de la longueur d'onde, pour la pluie et des paramètres du radar ou de l'autodirecteur, comprenant la puissance émise, le gain d'antenne, la longueur d'onde, le facteur de bruit, les pertes émission/réception, la bande de réception et la résolution distance.
- prise en compte des ambiguïtés distance et vitesse en fonction de la fréquence de répétition Fr,
- calcul du niveau du bruit porté Bp en fonction de la pureté spectrale de l'onde émise par le radar,
- addition du bruit porté au bruit thermique :

$$P_{Bp} = 10 \cdot \log(1 + 10^{Bp/10})$$

$P_{Bp}$ représentant la désensibilisation du récepteur radar par le bruit porté.

C) calcul du niveau de perte $P_{EclV}$ du signal due aux éclipses vitesse, l'éclipse vitesse étant évaluée à partir de l'écart de vitesse $\Delta V$ entre la vitesse radiale relative de la cible Vr et le fouillis principal et ses harmoniques, soit

$$\Delta V = \underset{-N \le n \le N}{Min}\Big[\big|Vr - (Vrp + n \cdot Av)\big|\Big]$$

Avec : Vrp :vitesse radiale du porteur
Av : ambiguïté vitesse
n : entier
N : nombre maximum d'ambiguïtés vitesse.
l'ambiguïté vitesse Av étant donnée par :

$$Av = \frac{\lambda}{2} \cdot Fr$$

avec : $\lambda$ : longueur d'onde émise.
le taux d'éclipse vitesse *EclV* étant calculé par :

si $\Delta V > \dfrac{Lfp}{2}$ : : *EclV* = 0 (hors éclipse) sinon : $EclV = 1 - \dfrac{\Delta V}{\dfrac{Lfp}{2}}$

avec Lfp la largeur de gêne du fouillis principal.
la perte $P_{EclV}$ (en dB) correspondant à l'éclipse vitesse étant calculée à partir d'une désensibilisation modélisée par une loi gaussienne :

$$P_{EclV} = P_0 + 10 \cdot \log\left[2^{-2 \cdot (K \cdot (1 - EclV))^2}\right]$$

avec $P_0$ la perte maximum et K la largeur qui dépendent du faisceau et des paramètres du radar, comprenant la puissance émise et le gain d'antenne.
D) calcul d'une désensibilisation globale $P_{glob}$ en dB, dépendant de la distance D, de la vitesse radiale Vr et de la fréquence de répétition Fr des impulsions :

$$P_{glob} = P_{EclD} + P_{Bp} + P_{EclV}$$

E) calcul de la désensibilisation totale $P_{tot}(Fr_1, ..., Fr_{NFr})$ en prenant en compte:

- le critère d'accrochage : une détection parmi les NFr fréquences de récurrence utilisées
- le domaine de recherche ou précision en distance $\Delta D_{DO}$ et en vitesse radiale $\Delta Vr_{DO}$, pouvant s'écrire :

$$P_{tot}(Fr_1, ..., Fr_{NFr}) = \sum_{D = D_{DO} - \Delta D_{DO}/2}^{D_{DO} + \Delta D_{DO}/2} \sum_{Vr = Vr_{DO} - \Delta Vr_{DO}/2}^{Vr_{DO} + \Delta Vr_{DO}/2} \underset{Fr}{Min}\big[P_{glob}(D, Vr, Fr)\big]$$

étant la fonction à minimiser
avec : $D_{DO}$ : la distance de la désignation d'objectif DO

$\Delta D_{DO}$ : la précision en distance de la DO
$Vr_{DO}$ : la vitesse radiale de la DO
$\Delta Vr_{Do}$ : la précision en vitesse radiale de la DO

**3.** Procédé de détection de cibles par un radar selon la revendication 2, **caractérisé en ce que** la désensibilisation totale minimale $P_{tot}(Fr_1, \ldots , Fr_{NFr})$ est obtenue par un algorithme combinant un échantillonnage de la plage de fréquence de répétition Fr et un algorithme classique à gradient.

**Patentansprüche**

**1.** Verfahren zum Detektieren von Zielen durch einen Radar in Anwesenheit diffuser zurückgestreuter Echos, wobei die Ziele gemäß einer apriorischen Ziellokalisierungshypothese in Distanz $D_{DO}$ mit einem Ungenauigkeitsbereich $\Delta D_{DO}$ und mit radialer Geschwindigkeit $Vr_{DO}$ mit einem Ungenauigkeitsbereich $\Delta Vr_{DO}$ geortet sind, wobei der Radar vom Typ Impulskompression eine Welle in Form einer Impulskette ...$E_i$, $E_{i+1}$, ... mit einer Rücklauffrequenz Fr, einem von der Welle getragenen Rauschen $B_p$ zu den Zielen sendet, wobei der Radar einen Detektor der empfangenen Echos mit der Sensibilität St aufweist,
**dadurch gekennzeichnet, dass** es darin besteht, die Rücklauffrequenzen Fr zu bestimmen, die im Bestimmungs-ungenauigkeitsbereich im Abstand $\Delta D_{DO}$ und bei radialer Geschwindigkeit $\Delta Vr_{DO}$ einerseits den Signalverlust des vom Ziel zurückgestreuten Echos und andererseits die Desensibilisierung des Radardetektors durch die von der Störung zurückgestreuten Echos minimiert,

- wobei der Verlust des von dem Ziel zurückgestreuten Signals von einem Verlust $P_{EclD}$ erzeugt wird, der auf die Distanzeklipse zurückzuführen ist, die von der Abschattung Lr des von dem Ziel zurückgestreuten Echos produziert wird, das von dem Radar während der Dauer Le des gesendeten Impulses ...$E_i$, $E_{i+1}$, ... empfangen wird, und von einem anderen Verlust $P_{EclV}$, der auf die Geschwindigkeitseklipse zurückzuführen ist, die aus der Differenz zwischen der relativen radialen Geschwindigkeit des Ziels und der Hauptstörung und ihrer Harmonischen resultiert, wobei die radiale Geschwindigkeit die Geschwindigkeitskomponente auf der Geraden ist, die den Radar und das Ziel verbindet,
- wobei die Desensibilisierung des Detektors des von dem Radar empfangenen Signals von dem Rauschen bewirkt wird, das von den Echos produziert wird, die von der atmosphärischen Störung aufgrund des von der gesendeten Welle getragenen Geräuschs $B_p$ zurückstreut werden.

**2.** Verfahren zum Detektieren von Zielen durch einen Radar nach Anspruch 1, **dadurch gekennzeichnet, dass** es mindestens die folgenden Schritte umfasst:

A) Berechnung des Niveaus des von der Distanzeklipse erzeugten Verlusts $P_{EclD}$ des Zielsignals mit:

$$P_{EclD} = -20 \cdot \log(1 - EclD)$$

wobei $EclD$ der Anteil der Distanzeklipse ist, der im Fall von Lr = Le, in Abhängigkeit von der vieldeutigen Distanz Da vom Ziel, folgendermaßen berechnet wird:

$$EclD = 1 - \frac{Da}{Le}$$

- wenn: $Da \leq Le,$
niedrige Eklipse,
- wenn $Le < Da \leq Dfr - Le, EclD = 0$
außerhalb der Eklipse

$$EclD = 1 - \frac{Dfr - Da}{Le}$$

- wenn: *Da > Dfr- Le,*

hohe Eklipse

mit: *Le* Dauer des Impulses Ei beim Senden, Lr Dauer der Abschattung Mi beim Empfang des vom Ziel zurückgestreuten Echos Eci,

B) Berechnung des Niveaus des getragenen Rauschens $B_p$, wobei die Berechnung die folgenden aufeinanderfolgenden Schritte umfasst:

- Berechnung des Niveaus der atmosphärischen Störung durch die Radargleichung in Abhängigkeit von der Volumenreflektivität, wobei die Volumenreflektivität für den Regen von der Niederschlagsrate und der Wellenlänge und von den Parametern des Radars oder des Zielsuchers abhängt, unter Berücksichtigung der gesendeten Leistung, der Antennenverstärkung, der Wellenlänge, des Rauschfaktors, der Sende-/Empfangsverluste, des Empfangsbands und der Distanzauflösung,

- Berücksichtigung der Distanz- und Geschwindigkeitsvieldeutigkeiten in Abhängigkeit von der Wiederholungsfrequenz Fr,

- Berechnung des Niveaus des getragenen Rauschens Bp in Abhängigkeit von der spektralen Reinheit der von dem Radar gesendeten Welle,

- Addition des getragenen Rauschens zum Wärmerauschen:

$$P_{Bp} = 10 \cdot \log(1 + 10^{Bp/10})$$

wobei $P_{Bp}$ die Desensibilisierung des Radarempfängers durch das getragene Rauschen darstellt,

C) Berechnung des Niveaus des Signalverlusts $P_{EclV}$ aufgrund der Geschwindigkeitseklipsen, wobei die Geschwindigkeitseklipse aus der Geschwindigkeitsdifferenz $\Delta V$ zwischen der relativen radialen Geschwindigkeit des Ziels Vr und der Hauptstörung und ihren Harmonischen berechnet wird, und zwar

$$\Delta V = \underset{-N \leq n \leq N}{Min} \big[ |Vr - (Vrp + n \cdot Av)| \big]$$

wobei: VrP: radiale Geschwindigkeit des Trägers

Av: Geschwindigkeitsvieldeutigkeit

n: Ganzzahl

N: maximale Anzahl der Geschwindigkeitsvieldeutigkeiten, wobei die Geschwindigkeitsvieldeutigkeit *Av* gegeben ist durch:

$$Av = \frac{\lambda}{2} \cdot Fr$$

wobei: $\lambda$: Länge der gesendeten Welle,

wobei der Anteil der Geschwindigkeitseklipse EclV berechnet wird durch:

wenn $\Delta V > \dfrac{Lfp}{2}$ : EclV = 0 (außerhalb der Eklipse)

$$EclV = 1 - \frac{\Delta V}{\dfrac{Lfp}{2}}$$

anderenfalls:

wobei Lfp die Störbreite der Hauptstörung ist,

wobei der Verlust $P_{EclV}$ (in dB), der Geschwindigkeitseklipse entspricht, aus einer durch ein Gaußsches Gesetz modellierte Desensibilisierung berechnet wird:

$$P_{EclV} = P_0 + 10 \cdot \log\left[2^{-2(K \cdot (1 - EclV))^2}\right]$$

wobei $P_0$ der maximale Verlust ist und K die Breite, die vom Strahl und von den Radarparametern abhängen, die gesendete Leistung und die Antennenverstärkung inklusive,

D) Berechnung einer globalen Desensibillisierung $P_{glob}$ in dB, die von der Distanz D, von der radialen Geschwindigkeit Vr und von der Wiederholungsfrequenz Fr der Impulse abhängt:

$$P_{glob} = P_{EclD} + P_{Bp} + P_{EclV}$$

E) Berechnung der totalen Desensibilisierung $P_{tot}(Fr_1, ..., Fr_{NFr})$ unter Berücksichtigung:

- des Aufschaltungskriteriums: eine Detektion unter den verwendeten NFr Wiederholungsfrequenzen
- des Such- oder Präzisionsbereichs in Distanz $\Delta D_{DO}$ und in radialer Geschwindigkeit $\Delta Vr_{DO}$,

nach folgender Formel:

$$P_{tot}(Fr_1, ..., Fr_{NFr}) = \sum_{D=D_{DO}-\Delta D_{DO}/2}^{D_{DO}+\Delta D_{DO}/2} \sum_{Vr=Vr_{DO}-\Delta Vr_{DO}/2}^{Vr_{DO}+\Delta Vr_{DO}/2} \underset{Fr}{Min}\left[P_{glob}(D, Vr, Fr)\right]$$

die die zu minimierende Funktion ist

wobei: $D_{DO}$: die Distanz der Zielerfassung DO

$\Delta D_{DO}$: die Distanzpräzision der DO

$Vr_{DO}$: die radiale Geschwindigkeit der DO

$\Delta Vr_{DO}$: die radiale Geschwindigkeitspräzision der DO.

3. Verfahren zum Detektieren von Zielen durch einen Radar nach Anspruch 2, **dadurch gekennzeichnet, dass** die totale minimale Desensibilisierung $P_{tot}(Fr_1, ..., Fr_{NFr})$ durch einen Algorithmus erreicht wird, der ein Sampling des Bereichs der Wiederholungsfrequenz Fr und einen klassischen Gradientenalgorithmus kombiniert.

## Claims

1. A method for detecting targets by a radar in the presence of broadcast backscattered echoes, said targets being designated, according to an a priori target localisation hypothesis, by distance $D_{DO}$ with a range of inaccuracy $\Delta D_{DO}$ and by radial speed $Vr_{DO}$ with a range of inaccuracy $\Delta Vr_{DO}$, said radar, of the pulse compression type, transmitting a wave toward said targets in the form of a pulse train $...E_i, E_{i+1}, ...$ of repetition frequency Fr, of noise $B_p$ carried by said wave, said radar comprising a detector of received echoes, of sensitivity St,

**characterised in that** it consists in determining the repetition frequencies Fr minimising in the range of designation of inaccuracy by distance $\Delta D_{DO}$ and by radial speed $\Delta Vr_{DO}$, on the one hand, the loss of signal of the echo backscattered by said target and, on the other hand, the desensitisation of the radar detector by the backscattered echoes by the clutter,

- the loss of signal backscattered by the target arising from a loss $P_{EclD}$ due to the distance eclipse produced by the masking Lr of the echo backscattered by said target received by said radar during the duration Le of the transmitted pulse $...E_i, E_{i+1}, ...$ and by another loss $P_{EclV}$ due to the speed eclipse resulting from the difference between the relative radial speed of said target and the principal clutter and its harmonics, said radial speed being the speed component on the straight line linking said radar and said target,

- the desensitisation of the detector of the signal received by said radar being caused by the noise produced by the echoes backscattered by the atmospheric clutter due to the noise $B_p$ carried by the transmitting wave.

2. The method for detecting targets by a radar according to claim 1, **characterised in that** it comprises at least the following steps:

A) calculating the level of the loss $P_{EclD}$ of the target signal arising from the distance eclipse, with:

$$P_{EclD} = -20 \cdot \log(1 - EclD)$$

$EclD$ being the rate of distance eclipse, being expressed in the case in which Lr = Le, as a function of the ambiguous distance Da of said target, as follows:

- if: $Da \leq Le,$

$$EclD = 1 - \frac{Da}{Le}$$

low eclipse,
- if: $Le < Da \leq Dfr - Le, EclD = 0$
excluding eclipse,
- if : $Da > Dfr - Le,$

$$EclD = 1 - \frac{Dfr - Da}{Le}$$

high eclipse,
with: $Le$ being the duration of the pulse Ei on emission, Lr the duration of the masking Mi on reception of the echo Eci backscattered by said target,

B) calculating the level of the carried noise $B_p$, said calculation comprising the following successive steps:

- calculating the level of atmospheric clutter by the equation of the radar as a function of the volume reflectivity, said volume reflectivity being a function of the rate of precipitation and of the wavelength, for rain and the parameters of the radar or of the homing device, comprising the power transmitted, the gain of the antenna, the wavelength, the noise factor, the transmission/reception losses, the reception band and the distance resolution,
- considering distance and speed ambiguities as a function of the repetition frequency Fr;
- calculating the carried noise Bp level as a function of the spectral purity of the wave transmitted by the radar,
- adding the carried noise to the thermal noise:

$$P_{Bp} = 10 \cdot \log(1 + 10^{Bp/10})$$

$P_{Bp}$ representing the desensitisation of the radar receiver by the carried noise,

C) calculating the level of losses $P_{EclV}$ of the signal due to speed eclipses, the speed eclipse being assessed on the basis of the speed difference $\Delta V$ between the relative radial speed of the target Vr and the principal clutter and its harmonics, that is:

$$\Delta V = \underset{-N \leq n \leq N}{Min} \left[ |Vr - (Vrp + n \cdot Av)| \right]$$

with: Vrp being the radial speed of the carrier,
Av being the speed ambiguity,

n being an integer,
N being the maximum number of speed ambiguities, the speed ambiguity Av being given by:

$$Av = \frac{\lambda}{2} \cdot Fr$$

with: λ being the transmitted wavelength,
the speed eclipse rate EclV being calculated by:

$$\text{if } \Delta V > \frac{Lfp}{2} : EclV = 0 \text{ (excluding eclipse)},$$

otherwise: $EclV = 1 - \dfrac{\Delta V}{\dfrac{Lfp}{2}}$

with Lfp being the breadth of interference of the principal clutter; the loss $P_{EclV}$ (in dB) corresponding to the speed eclipse being calculated on the basis of a desensitisation modelled by a Gaussian rule:

$$P_{EclV} = P_0 + 10 \cdot \log\left[2^{-2(K \cdot (1 - EclV))^2}\right]$$

with $P_0$ being the maximum loss and K the breadth that depends on the beam and the parameters of the radar, comprising the power transmitted and the antenna gain,

    D) calculating a global desensitisation $P_{glob}$ in dB depending on the distance D, the radial speed Vr and the repetition frequency Fr of the pulses:

$$P_{glob} = P_{EclD} + P_{Bp} + P_{EclV}$$

    E) calculating the total desensitisation $P_{tot}$ $(Fr_1, ..., Fr_{NFr})$ by taking into account:

        - the lock-on criterion: a detection from among the NFr repetition frequencies used;
        - the range of search or precision by distance $\Delta D_{DO}$ and by radial speed $\Delta Vr_{DO}$,
        can be expressed as:

$$P_{tot}(Fr_1, ..., Fr_{NFr}) = \sum_{D = D_{DO} - \Delta D_{DO}/2}^{D_{DO} + \Delta D_{DO}/2} \sum_{Vr = Vr_{DO} - \Delta Vr_{DO}/2}^{Vr_{DO} + \Delta Vr_{DO}/2} \underset{Fr}{Min}\left[P_{glob}(D, Vr, Fr)\right]$$

    being the function to minimise;
    with: $D_{DO}$ being the distance of the objective designation DO;
    $\Delta D_{DO}$ being the precision by distance of the DO;
    $Vr_{DO}$ being the radial speed of the DO;
    $\Delta Vr_{DO}$ being the precision by radial speed of the DO.

3. The method for detecting targets by a radar according to claim 2, **characterised in that** the minimum total desensitisation $P_{tot}(Fr_1, ..., Fr_{NFr})$ is obtained by an algorithm combining a sampling of the repetition frequency range Fr and a conventional gradient algorithm.

FIG.1

FIG.2a

FIG.2b

FIG.3

FIG.4

FIG.5

FIG.6a

FIG.6b

FIG.6c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0964267 A2